# EUROPÄISCHE PATENTANMELDUNG

(11) **EP 1 127 736 A1**
(43) Veröffentlichungstag der Anmeldung: **29.08.2001**
(21) Anmeldenummer: 01102977.4
(22) Anmeldetag: 08.02.2001
(51) Int. Cl.: B60M 1/18

(54) **Stromversorgung für den Antrieb eines Schalters in Gleichstrom-Bahnnetzen, insbesondere für Streckentrennschalter**

(30) Priorität: 23.02.2000 DE 10008403
(71) Anmelder: SIEMENS AKTIENGESELLSCHAFT, 80333 München (DE)
(72) Erfinder: Grimm, Günter, Dipl.-Ing., 06118 Halle (DE)

(57) **Zusammenfassung**

Bisher muß für Schalter in Gleichspannungs-Bahnnetzen, z. B. für Streckentrenner, eine Wechselspannung aus dem öffentlichen Netz bereitgestellt werden, was mit hohem Errichtungs- und Betreiberaufwand verbunden ist.

Vorliegende Schaltung sieht nunmehr vor, daß die Spannung von den Fahrleitungsabschnitten (I, II) beidseits eines Streckentrennschalters (STR) abgenommen und jeweils mit einer Zuleitung an ein Schaltschütz (S1, S2) geführt ist, die im eingeschalteten Zustand die jeweilige Fahrleitungsspannung auf einen Wechselrichter (WR) schalten, mit dessen Ausgangswechselspannung der Antrieb des Schalters beaufschlagbar ist, wobei die Schaltschütze (S1, S2) im Sinne einer Vorrangschaltung so miteinander verschaltet sind, daß bei Spannungsbeaufschlagung des ersten Schaltschützes (S1) die Zuleitung vom zugeordneten Fahrleitungsabschnitt (II) zum zweiten Schaltschütz (S2) durch einen Schaltkontakt (s12) unterbrochen ist.

## Beschreibung

Die Erfindung betrifft die Stromversorgung für den Antrieb eines Schalters in Gleichstrom-Bahnnetzen, insbesondere für Streckentrennschalter.

Die Fahrleitungen von Gleichstrombahnen werden in kurzen Abständen von Gleichstrom-Unterwerken aus versorgt, von denen die Betriebsspannung über Streckenschalter und Streckenkabel an die Fahrleitung geführt wird. Während die Schalterantriebe der Streckenschalter in aller Regel keine Probleme darstellen, da in den Unterwerken sowohl Wechselspannung als auch Hilfsgleichspannungen zur Verfügung stehen, benötigen z. B. die Streckentrennschalter, mit denen die Fahrleitung in einzelne Fahrleitungsabschnitte unterteilt ist, eine separate Stromversorgung, wenn sie fernschaltbar sein sollen. Streckentrennschalter sind nötig, um die Fahrleitungen abschnittsweise auftrennen zu können und so beispielsweise Baumaßnahmen an einem Fahrleitungsabschnitt durchführen zu können. Oftmals werden Fahrleitungsabschnitte auch von verschiedenen Energieanbietern versorgt und werden deshalb getrennt betrieben.

Die Stromversorgung für die Antriebe der Streckentrennschalter, die als motorbetätigte Mastschalter ausgeführt sind, erfolgt üblicherweise aus dem 220-V-Netz. Hierzu muß die Netzspannung an einen Schaltschrank in der Nähe des Mastes, der den Streckentrennschalter einschließlich seinem Antrieb trägt, herangeführt werden, was, insbesondere bei langen, durch unbewohnte Gebiete geführten Streckenabschnitten, mit einem erheblichen Aufwand verbunden ist. Die Anlage muß außerdem mit einem Stromzähler ausgerüstet werden, der regelmäßig durch den örtlichen Netzbetreiber abgelesen werden muß, da die Energieabnahme gegenüber dem Netzbetreiber abgerechnet werden muß. Wegen dieses hohen Errichtungs- und Betreiberaufwandes sind Schalterfernantriebe nicht sehr verbreitet. Die Streckentrennschalter werden dann nur von Hand schaltbar ausgeführt, obwohl für eine zentrale Steuerung des Bahnnetzes eine Fernbedienbarkeit außerordentlich wünschenswert wäre.

Der Erfindung liegt die Aufgabe zugrunde, eine alternative Möglichkeit zur Stromversorgung von Schaltern in Gleichstrom-Bahnnetzen anzugeben, die mit einem geringeren Errichtungs- und Betreiberaufwand verbunden ist.

Erfindungsgemäß wird die Aufgabe gelöst durch die Merkmale des Anspruchs 1. Zweckmäßige Ausgestaltungen sind Gegenstand der Unteransprüche.

Danach wird die Spannung von den Fahrleitungsabschnitten beidseits eines Streckentrennschalters abgenommen und jeweils mit einer Zuleitung an ein Schaltschütz geführt. Diese schalten im eingeschalteten Zustand die jeweilige Fahrleitungsspannung auf einen Wechselrichter, mit dessen Ausgangswechselspannung der Antrieb des Schalters beaufschlagbar ist, wobei die Schaltschütze im Sinne einer Vorrangschaltung so miteinander verschaltet sind, daß bei Spannungsbeaufschlagung des ersten Schaltschützes die Zuleitung vom zugeordneten Fahrleitungsabschnitt zum zweiten Schaltschütz durch einen Schaltkontakt unterbrochen ist.

Durch den Einsatz eines Wechselrichters kann die Fahrleitungsspannung für die Stromversorgung der Schalterantriebe genutzt werden. Der Wechselrichter wird über die Fahrleitungsspannung des Fahrleitungsabschnittes versorgt, der weiterhin unter Spannung steht, wobei ein Vorrang für einen Fahrleitungsabschnitt besteht und somit ausgeschlossen wird, daß über die Zuleitungen von den Fahrleitungsabschnitten zum Wechselrichter eine Verbindung zwischen den Fahrleitungsabschnitten bestehen bleibt. Wird der mit Vorrang behandelte Fahrleitungsabschnitt spannungsfrei geschaltet, so erfolgt die Stromversorgung des Wechselrichters automatisch durch den anderen Fahrleitungsabschnitt. Kehrt die Spannung am ersten Fahrleitungsabschnitt wieder, so wird ebenso automatisch wieder auf diesen zurückgeschaltet.

Ist neben den beiden Fahrleitungsabschnitten auch noch eine Einspeisung über eine Speiseleitung mit einem zugeordneten Schalter vorhanden, so daß an dessen Einspeiseseite eine weitere Gleichspannungsquelle zur Verfügung steht, so läßt sich die Schaltung dahingehend erweitern, daß beide Seiten dieses Schalters in gleicher Weise mit zwei weiteren Schaltschützen verbunden werden, wobei wiederum eine Seite einen Vorrang besitzt. Die Schaltschützenpaare werden dann kaskadiert so verschaltet, daß der Ausgang des ersten Paares einen Eingang des zweiten Paares bildet, so daß nacheinander ein Vorrang aller drei Gleichspannungsquellen gebildet wird.

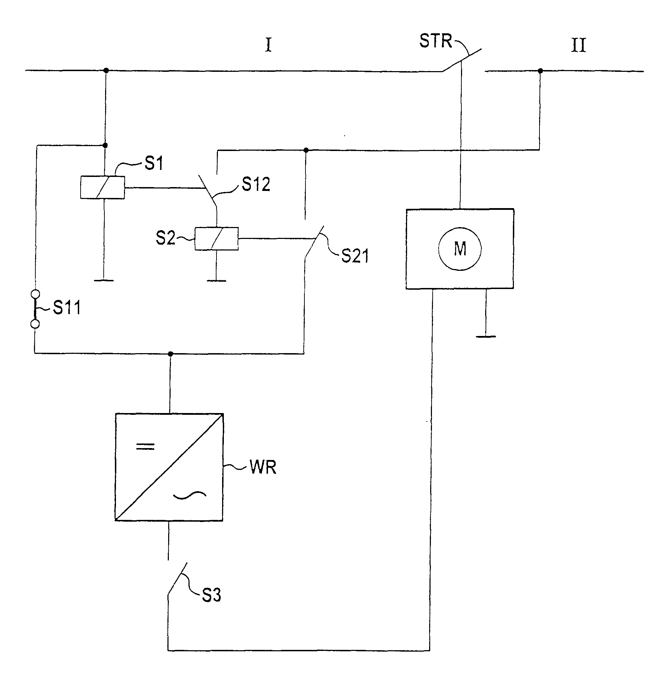

Die Wirkungsweise der Erfindung soll nachstehend anhand eines Ausführungsbeispiels noch näher erläutert werden. Die Zeichnung zeigt eine Prinzipdarstellung der Stromversorgung für einen Streckentrennschalter.

Ein Streckentrennschalter STR trennt die Fahrleitung eines Gleichspannungs-Bahnnetzes in zwei Fahrleitungsabschnitte I und II auf. Der Antrieb für den Streckentrennschalter STR erfolgt durch einen Motor M auf folgende Weise

Vom Fahrleitungsabschnitt I wird die Fahrleitungsspannung über eine Zuleitung an ein Schaltschütz S1, vom Fahrleitungsabschnitt II über eine weitere Zuleitung an ein Schaltschütz S2 geführt. Die Zeichnung zeigt die Kontaktstellung der Schaltschütze S1 und S2 in einem Zustand, bei dem der Fahrleitungsabschnitt I unter Spannung steht. Das Schaltschütz S1 hat angezogen und schließt einen Kontakt s11, so daß ein Wechselrichter WR mit der Fahrleitungsgleichspannung von 650 V beaufschlagt wird. Am Ausgang des Wechselrichters WR wird eine Wechselspannung von 220 V bereitgestellt. Mit dieser Wechselspannung kann über einen fernbedienbaren Schalter S3 der Motor M betätigt werden, der damit den Streckentrennschalter STR entweder öffnet oder schließt.

Durch einen Hilfskontakt s12 wird gleichzeitig die Zuleitung zum Schaltschütz S2 unterbrochen. In dieser Schaltstellung ist ein vom Schaltschütz S2 betätigter Kontakt s21 geöffnet, so daß zwischen den Fahrleitungsabschnitten I und II keine Verbindung mehr besteht. Der Fahrleitungsabschnitt II kann darauf spannungsfrei geschaltet werden, ohne daß die Stromversorgung für den Antrieb des Streckentrennschalters STR davon betroffen wäre.

Soll dagegen der Fahrleitungsabschnitt I spannungsfrei geschaltet werden, so kann dies gleichermaßen geschehen. In diesem Fall fällt das Schaltschütz S1 ab und schließt dabei dem Hilfskontakt s12, so daß das Schaltschütz S2 vom Fahrleitungsabschnitt II eine Spannung erhält und diese mit dem Kontakt s21 auf den Wechselrichter WR schaltet. Wird die Spannung am Fahrleitungsabschnitt I wieder zugeschaltet, so schaltet das Schaltschütz S1 wieder ein; Schaltschütz S2 schaltet aus und die Speisung des Wechselrichters WR wird wieder vom Fahrleitungsabschnitt I übernommen.

Hier nicht gezeigt ist die Pufferung einer Hilfsspannung am Wechselrichter WR, die zu seiner Eigenversorgung nötig ist.

Der Schaltzustand der Schaltschütze S1 und S2 kann an Anzeigeeinrichtungen am Einbauort oder mittels Datenübertragung in einer Schaltzentrale angezeigt werden. Hierzu sind die Schaltschütze S1 und S2 mit entsprechenden Hilfskontakten versehen. Ebenso kann durch Spannungsmelderelais das Vorhandensein einer Spannung an den Schaltschützen S1 und S2 angezeigt werden.

Da die Hilfskontakte der Schaltschütze nur geringe Ströme zu schalten vermögen, kann vorgesehen sein, daß der Hilfskontakt s12 die Zuleitung zum Schaltschütz S2 nicht direkt unterbricht, sondern daß hierbei ein Schaltverstärker zwischengeschaltet ist.

## Patentansprüche

1. Stromversorgung für den Antrieb eines Schalters in Gleichstrom-Bahnnetzen, insbesondere für Streckentrennschalter (STR), dadurch gekennzeichnet, daß die Spannung von den Fahrleitungsabschnitten (I, II) beidseits eines Streckentrennschalters (STR) abgenommen und jeweils mit einer Zuleitung an ein Schaltschütz (S1, S2) geführt ist, die im eingeschalteten Zustand die jeweilige Fahrleitungsspannung auf einen Wechselrichter (WR) schalten, mit dessen Ausgangswechselspannung der Antrieb des Schalters beaufschlagbar ist, wobei die Schaltschütze (S1, S2) im Sinne einer Vorrangschaltung so miteinander verschaltet sind, daß bei Spannungsbeaufschlagung des ersten Schaltschützes (S1) die Zuleitung vom zugeordneten Fahrleitungsabschnitt (II) zum zweiten Schaltschütz (S2) durch einen Schaltkontakt (s12) unterbrochen ist.

2. Stromversorgung nach Anspruch 1, dadurch gekennzeichnet, daß der Antrieb des Schalters über eine Fernwirkanlage bedienbar ist.

3. Stromversorgung nach Anspruch 1 oder 2, dadurch gekennzeichnet, daß die Unterbrechung der Zuleitung zum zweiten Schaltschütz (S2) potentialfrei über einen Schaltverstärker erfolgt, an dessen Eingang das Eingangspotential des ersten Schaltschützes (S1) geführt ist.

4. Stromversorgung nach einem der vorangehenden Ansprüche, dadurch gekennzeichnet, daß der Wechselrichter (WR) zur Eigenversorgung einen Hilfsspannungsausgang aufweist, der über eine Pufferbatterie gestützt ist.

5. Stromversorgung nach einem der vorangehenden Ansprüche, dadurch gekennzeichnet, daß die Spannungsbeaufschlagung der Schaltschütze (S1, S2) durch Anzeigeeinrichtungen signalisiert ist.

6. Stromversorgung nach einem der vorangehenden Ansprüche, dadurch gekennzeichnet, daß der Schaltzustand der Schaltschütze (S1, S2) durch mit Hilfskontakten an den Schaltschützen verbundene Anzeigeeinrichtungen signalisiert ist.

7. Stromversorgung nach einem der vorangehende Ansprüche, dadurch gekennzeichnet, daß für jede weitere Gleichspannungsquelle am gleichen Ort ein weiteres Paar von Schaltschützen, die für sich ebenfalls im Sinne einer Vorrangschaltung miteinander verschaltet sind, angeordnet ist, die mit dem ersten Paar von Schaltschützen (S1, S2) kaskadiert sind.
